# EUROPÄISCHE PATENTSCHRIFT

(11) **EP 2 944 907 B1**
(45) Veröffentlichungstag und Bekanntmachung des Hinweises auf die Patenterteilung: **12.09.2018**
(21) Anmeldenummer: 14001682.5
(22) Anmeldetag: 13.05.2014
(51) Int. Cl.: F27B 9/02, F27B 9/26

(54) **Ofen zum Brennen von keramischen Formlingen**
Kiln for the firing of ceramic blanks
Four de brûlage d'ébauches en céramique

(43) Veröffentlichungstag der Anmeldung: 18.11.2015
(73) Patentinhaber: Keller HCW GmbH, 49479 Ibbenbüren-Laggenbeck (DE)
(72) Erfinder: Heiner Gansmann, 49205 Hasbergen (DE); Peter Heitmann, 48612 Horstman (DE); Rainer Hüsing, 48480 Spelle (DE)
(74) Vertreter: Pott, Ulrich

(56) Entgegenhaltungen:
- EP-A1- 2 568 244
- EP-A1- 2 778 588
- EP-A2- 2 039 787
- ES-A2- 2 059 253
- US-A- 1 437 769
- US-A- 1 522 166

## Beschreibung

Die Erfindung bezieht sich auf einen Ofen zum Brennen von keramischen Formlingen, insbesondere von Ziegeln mit einer Mehrzahl von parallel zueinander und entlang einer längs verlaufenden Ofenstrecke bewegbaren, mehrere Ofenwagen umfassenden Zügen, auf denen die Formlinge anzuordnen sind, wobei die Ofenstrecke eine Brennzone zur Erhitzung der Formlinge aufweist und wobei nebeneinander angeordnete Züge in entgegengesetzte Richtungen bewegbar sind ohne eine Richtungsumkehr durch eine Brennzone, wobei zumindest ein Lüfter vorgesehen ist.

Ein Ofen dieser Art ist aus der DE 10 2011 112 838 A1 bekannt. Bei diesem Ofen erfolgt die Bestückung des Ofens auf der einen Seite der Ofenstrecke, während auf der gegenüberliegenden anderen Seite der Ofenstrecke eine Bestückung der jeweiligen Züge mit Formlingen für einen Transport durch den Ofen entlang der Ofenstrecke in die entgegengesetzte Richtung erfolgt. Dabei findet in den jeweiligen Zügen keine Richtungsumkehr statt, so dass sich die Formlinge auf ihren jeweiligen Ofenzügen durch die Brennzone hindurch bewegen und jeweils am bezüglich ihrer Bestückung entgegengesetzten Ende der Ofenstrecke dieser entnommen werden. Durch die auf beiden Seiten der Brennzone jeweils aneinander vorbei bewegten Formlinge werden von den bereits die Brennzone verlassenden Formlinge andere als Kaltbesatz aufgeheizt, bevor sie in die Brennzone gelangen. Durch den Verzicht auf eine Richtungsumkehr in der Brennzone wird der zur Verfügung stehende Bauraum des Ofens optimal ausgenutzt. Die Formlinge werden in der Brennzone durch in einer Längsgasse (Haupttunnel) zwischen den Zügen angeordnete Brennelemente erhitzt. Hierdurch kann die verwendete Heizenergie direkt zu den Formlingen gebracht werden, was zu einer erhöhten Effizienz in der Brennzone und mithin zu einem verringerten Energieeinsatz führt. Die Erhitzung der Ziegel oder dergleichen Formlinge kann unmittelbar und gleichmäßig über deren Aufbauhöhe im Besatz verteilt erfolgen.

Dieser gattungsgemäße Ofen hat gegenüber herkömmlichen anderen Öfen erhebliche Vorteile, soll jedoch weiter verbessert werden.

Es ist daher Aufgabe der vorliegenden Erfindung, einen Ofen der eingangs genannten Art weiter zu optimieren.

Zur Lösung dieser Aufgabe zeichnet sich der Ofen der eingangs genannten Art dadurch aus, dass zumindest zwei nebeneinander angeordnete benachbarte Ofenwagen bewegungsfest miteinander koppelbar sind und eine gemeinsame Abdeckung zur Anordnung von Formlingen aufweisen.

Damit ist ein Ofen zur Verfügung gestellt, der sehr flexibel auf unterschiedliche Größen von Formlingen zu reagieren in der Lage ist, indem in einer ersten Nutzungsausführung jeder Ofenwagen eine Anzahl von Formlingen trägt, wobei benachbarte Ofenwagen in entgegengesetzte Richtungen durch die Brennzone und die Aufwärmungs- und Kühlungszonen des Ofen transportiert werden, so dass wechselseitig ein Kaltbesatz an Formlingen und ein Warmbesatz an Formlingen in entgegengesetzte Richtungen aneinander vorbeitransportiert werden. Gemäß der Erfindung sind zwei benachbarte Ofenwagen miteinander bewegungsfest gekoppelt und bilden demzufolge ein Ofenwagenpaar mit einer gemeinsamen oberen Abdeckplatte, die zum Beispiel Formlinge größerer Abmessungen trägt, die von einem Ofenwagen alleine nicht hätten aufgenommen werden können. Somit wird ein derartiges Ofenwagenpaar durch den Ofen transportiert und trägt beispielsweise einen Warmbesatz an Formlingen, wobei ein benachbartes Ofenwagenpaar in entgegengesetzte Richtung mit der gemeinsamen Abdeckung transportiert wird und einen Kaltbesatz an Formlingen transportieren kann. Damit kann der Ofen mit seinen Ofenwagen außerordentlich flexibel auf verschieden geometrische Abmessungen von Formlingen reagieren, kann jedoch auch wie in herkömmlicher Weise jeweils einzelne Ofenwagen nutzen und transportieren.

Die Ofenwagen lassen sich dazu beispielsweise mechanisch koppeln und entkoppeln und beispielsweise auch über Schnellkupplungen und Schnellverschlüsse aneinander festlegen.

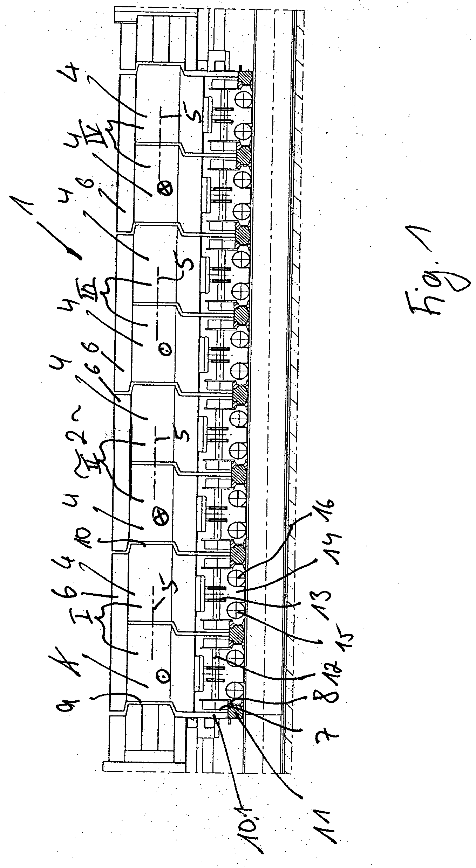

Weitere vorteilhafte Ausgestaltungen der Erfindung ergeben sich aus weiteren Unteransprüchen, der nachfolgenden Beschreibung und der Zeichnung.

In der Zeichnung ist ein Ausführungsbeispiel eines Ofens mit aneinander paarweise zu koppelnden Ofenwagen in einer Querschnittsdarstellung gezeigt.

Allgemein mit 1 ist der Ofen beziffert, der eine Ofenstrecke 2 aufweist mit einer Brennzone, die einen Umwälzkanal und Kühl- und Aufwärmzonen aufweisen soll. Zudem sollen in dem Ofen nicht näher gezeigte Brennelemente sowie Lüfter angeordnet sein, über die in dem Ofen eine Luftzwangskonvektion eingestellt werden kann.

In dem gezeigten Ausführungsbeispiel sind insgesamt acht Ofenwagen 4 vorgesehen, die paarweise mechanisch bei 5 miteinander zu koppeln sind, so dass zwei Ofenwagen einen Zug I, zwei Ofenwagen einen Zug II, zwei Ofenwagen einen Zug III und zwei Ofenwagen den Zug IV bilden. Dabei bewegen sich die Züge I und III aus der Zeichnungsebene heraus und die Züge II und IV in die Zeichnungsebene hinein und haben mithin entgegengesetzte Zugrichtungen, wobei die Züge I und III einen Kaltbesatz an nicht näher gezeigten Formlingen auf ihren gemeinsamen Abdeckungen 6 tragen und die Züge II und IV einen entsprechenden Warmbesatz an nicht gezeigten Formlingen.

Die Ofenwagen 4 sind über Räder 7 auf Schienen 8 geführt und haben jeweils eine Einschnürung 9 und eine entsprechende Erweiterung 10.1, wobei die Einschnürung 9 und die Erweiterung 10 kongruent ausgebildet sind, so dass sie einen Spalt 10.1 zueinander aufweisen, der jeweils in eine Schleifabdichtung 11, die als Sandrinne ausgebildet ist, mündet. Die Räder 8 sind über eine Achse 12 miteinander verbunden, wobei die Achse 12 in Lagerstellen 13 gelagert ist. Es sind zwei Kühlrohre 15, 16 vorgesehen mit einer Befestigungsklammer 14.

## Patentansprüche

1. Ofen (1) zum Brennen von keramischen Formlingen, insbesondere von Ziegeln mit einer Mehrzahl von parallel zueinander und entlang einer längs verlaufenden Ofenstrecke bewegbaren, mehrere Ofenwagen (4) umfassenden Zügen (I, II, III, IV), auf denen die Formlinge anzuordnen sind, wobei die Ofenstrecke eine Brennzone zur Erhitzung der Formlinge aufweist und wobei nebeneinander angeordnete Züge (I, II, III, IV) in entgegengesetzte Richtungen ohne eine Richtungsumkehr durch eine Brennzone bewegbar sind und wobei zumindest ein Lüfter vorgesehen ist, **dadurch gekennzeichnet, dass** zumindest zwei nebeneinander angeordnete benachbarte Ofenwagen (4) bewegungsfest miteinander gekoppelt sind und eine gemeinsame Abdeckung (6) zur Anordnung von Formlingen aufweisen.

2. Ofen nach Anspruch 1, **dadurch gekennzeichnet, dass** zwei benachbarte Ofenwagen (4) entkoppelbar miteinander verbindbar sind.

3. Ofen nach Anspruch 1 oder 2, **dadurch gekennzeichnet, dass** zwei benachbarte Ofenwagen (4) durch eine mechanische Verbindung (5) miteinander koppelbar sind.

4. Ofen nach einem der Ansprüche 1 bis 3, **dadurch gekennzeichnet, dass** ein jeweiliger Ofenwagen (4) über eine Achse (12) verbundene, auf einer jeweiligen Schiene (8) mit einem zugeordnetem Schleifabdichtungselement (11) abrollbare Räder (7) aufweist.

5. Ofen nach Anspruch 4, **dadurch gekennzeichnet, dass** das Schleifabdichtungselement (11) als Sandrinne oder als mineralisches Element ausgebildet ist.

6. Ofen nach einem der Ansprüche 1 bis 5, **dadurch gekennzeichnet, dass** benachbarte Räder (7) von benachbarten Ofenwagen (4) jeweils auf Schienen (8) abrollbar sind zwischen denen ein gemeinsames Schleifabdichtungselement (11) angeordnet ist.

7. Ofen nach einem der Ansprüche 1 bis 6, **dadurch gekennzeichnet, dass** zwischen den über eine Achse (12) verbundenen Rädern (7) eines Ofenwagens Kühlrohre (15) in den Ofenwagen (4) eingreifen.

8. Ofen nach einem der Ansprüche 1 bis 7, **dadurch gekennzeichnet, dass** die Achse (12) der Räder (7) eines Ofenwagens (4) in einen mittleren Bereich des Ofenwagens (4) über Lager (13) gelagert ist.

9. Ofen nach Anspruch 8, **dadurch gekennzeichnet, dass** die Lager (13) der Achse (12) der Räder (7) eines Ofenwagens (4) in einem Bereich oberhalb und zwischen zwei Kühlungsrohren (15) gelegen sind.

10. Ofen nach einem der Ansprüche 1 bis 9, **dadurch gekennzeichnet, dass** benachbarte Ofenwagen (4) wechselseitig eine Ausnehmung (9) und eine Erweiterung (10) aufweisen, wobei ein benachbarter Ofenwagen (4) eine in die Ausnehmung (9) eines benachbarten Ofenwagens (4) eingreifende Erweiterung (10) nach Art eines Nut-/Federsystems mit einem Spalt (10.1) aufweist.

## Claims

1. Kiln (1) for firing ceramic blanks, in particular tiles, comprising a plurality of parallel trains (I, II, III, IV) that can move along a longitudinally extending kiln path and that comprise a plurality of kiln wagons (4), on which trains the blanks are to be arranged, the kiln path comprising a firing zone for heating the blanks and adjacent trains (I, II, III, IV) being movable in opposing directions without a change of direction through a firing zone and at least one fan being provided, **characterised in that** two adjacent kiln wagons (4) can be coupled to one another in an immovable manner and comprise a common cover (6) for arranging blanks.

2. Kiln according to claim 1, **characterised in that** two adjacent kiln wagons (4) can bedetachably connected to one another.

3. Kiln according to either claim 1 or claim 2, **characterised in that** two adjacent kiln wagons (4) can be coupled to another by means of a mechanical connection (5).

4. Kiln according to any of claims 1 to 3, **characterised in that** each kiln wagon (4) comprises wheels (7) that are connected via an axle (12) and can travel on a relevant rail (8) comprising an associated friction seal element (11).

5. Kiln according to claim 4, **characterised in that** the friction seal element (11) is designed as a sand channel or as a mineral element.

6. Kiln according to any of claims 1 to 5, **characterised in that** adjacent wheels (7) of adjacent kiln wagons (4) can in each case travel on rails (8) between which a common friction seal element (11) is arranged.

7. Kiln according to any of claims 1 to 6, **characterised in that** cooling pipes (15) engage in the kiln wagons (4) between the wheels (7) of a kiln wagon connected via an axle (12).

8. Kiln according to any of claims 1 to 7, **characterised in that** the axle (12) of the wheels (7) of a kiln wagon (4) is mounted in a central region of the kiln wagon (4) by means of bearings (13).

9. Kiln according to claim 8, **characterised in that** the bearings (13) of the axle (12) of the wheels (7) of a kiln wagon (4) are located in a region above and between two cooling pipes (15).

10. Kiln according to any of claims 1 to 9, **characterised in that** adjacent kiln wagons (4) alternately comprise a recess (9) and an extension (10), an adjacent kiln wagon (4) comprising an extension (10) that engages in the recess (9) of an adjacent kiln wagon (4) in the manner of a tongue and groove system having a gap (10.1).

## Revendications

1. Four (1) destiné à la cuisson de pièces brutes en céramique, en particulier de tuiles, comprenant une pluralité de trains (I, II, III, IV) qui comportent une pluralité de wagons de four (4) déplaçables parallèlement les uns aux autres et le long d'une section de four longitudinale et sur lesquels les pièces brutes doivent être disposées, la section de four comprenant une zone de cuisson destinée à chauffer les pièces brutes et des trains (I, II, III, IV) disposés côte à côte étant déplaçables à travers une zone de cuisson sans changement de direction dans des directions opposées, et au moins un ventilateur étant prévu, **caractérisé en ce qu'**au moins deux wagons de four adjacents (4) disposés côte à côte sont accouplés l'un à l'autre solidairement en déplacement et comportent un capot commun (6) destiné à la disposition des pièces brutes.

2. Four selon la revendication 1, **caractérisé en ce que** deux wagons de four adjacents (4) sont reliés l'un à l'autre de manière à pouvoir être désaccouplés.

3. Four selon la revendication 1 ou 2, **caractérisé en ce que** deux wagons de four adjacents (4) peuvent être accouplés l'un à l'autre par une liaison mécanique (5).

4. Four selon l'une des revendications 1 à 3, **caractérisé en ce qu'**un chariot de four respectif (4) comporte des roues (7) qui sont reliées par un essieu (12) et qui peuvent rouler sur un rail respectif (8) auquel est associé un élément d'étanchéité à l'abrasion (11).

5. Four selon la revendication 4, **caractérisé en ce que** l'élément d'étanchéité à l'abrasion (11) est conçu comme un canal de sable ou comme un élément minéral.

6. Four selon l'une des revendications 1 à 5, **caractérisé en ce que** des roues adjacentes (7) de wagons de four adjacents (4) peuvent chacune rouler sur des rails (8) entre lesquels est disposé un élément d'étanchéité à l'abrasion commun (11).

7. Four selon l'une des revendications 1 à 6, **caractérisé en ce qu'**entre les roues (7) d'un chariot de four, reliées par un essieu (12), des tubes de refroidissement (15) s'engagent dans le chariot de four (4).

8. Four selon l'une des revendications 1 à 7, **caractérisé en ce que** l'essieu (12) des roues (7) d'un chariot de four (4) est monté dans une zone centrale du chariot de four (4) au moyen de paliers (13).

9. Four selon la revendication 8, **caractérisé en ce que** les paliers (13) de l'essieu (12) des roues (7) d'un chariot de four (4) sont placés dans un zone située au-dessus des deux tubes de refroidissement (15) et entre ceux-ci.

10. Four selon l'une des revendications 1 à 9, **caractérisé en ce que** des wagons de four adjacents (4) comportent alternativement un évidement (9) et une extension (10), un wagon de four adjacent (4) comportant une extension (10) qui s'engage dans l'évidement (9) d'un chariot de four adjacent (4) à la manière d'un système à languette et rainure pourvu d'un espace (10.1).
